# EUROPEAN PATENT APPLICATION

(11) **EP 0 661 361 A1**
(43) Date of publication of application: **05.07.1995**
(21) Application number: 94120151.9
(22) Date of filing: 20.12.1994
(51) Int. Cl.: C09D 133/14, C09D 133/06, C09D 175/00, C08K 5/21, C08K 5/16

(54) **Automotive undercoat coating compositions containing reactive urea/urethane compounds**

(30) Priority: 28.12.1993 US 174638
(71) Applicant: BASF CORPORATION, Mount Olive, New Jersey 08728-1234 (US)
(72) Inventor: Shaw, Rajnikant P., Holland, Ohio 43528 (US); Shepler, Stewart, Bowling Green, Ohio 43402 (US); Dantiki, Sudhar, Toledo, Ohio 43617 (US)
(74) Representative: Münch, Volker, Dr.

(57) **Abstract**

Low VOC automotive sealer compositions containing reactive urea/urethane compounds are disclosed. Sealer and tintable sealer formulations are found to be especially useful for automotive refinish according to this invention.

## Description

### (A) FIELD OF THE INVENTION

The present invention relates to a automotive undercoat coating composition and more particularly to low volatile organic content (VOC) automotive undercoat coating compositions, which can be cured at ambient conditions or which may be baked. The coatings are especially useful as automotive refinish undercoat compositions.

Automotive undercoat coating compositions according to the present invention having low VOC content comprise pigmented primer and sealer formulations, tintable sealer formulations and the clear sealer formulations.

### (B) BACKGROUND OF THE INVENTION

In order to meet EPA regulations, the use of high solids coatings having reduced amount of solvents and its application using high volume low pressure spray gun has become customary. Typically, low VOC coatings have been found to exhibit below average drying when compared to conventional automotive coatings with longer dry times and short pot life.

To apply topcoat, wet on wet over sealer, the faster dry time of the sealer is preferred and advantagenous for the painter to do more repair jobs per day. Also for the improved efficiency of the repair jobs for automotive refinish body shops, the early sanding properties of the primer is desirable.

According to one aspects of the present invention, the low VOC sealer compositions with faster drying chacteristics resulting in improved distinctness of image (DOI) are disclosed.

### SUMMARY OF THE INVENTION

The present invention relates to a novel coating composition comprising:
a) 5-65 percent of a acrylic co-polymer with a glass transition temperature between -10°C and 35°C (using the Fox method og Tg calculation) and a relative weight average molecular weight of 1000-7000.
b) 10 to 50 percent of an organic solvent
c) 1 to 90 percent of a reactive urea/urethane compounds
d) 0 to 30 percent of a reactive diluent
e) 10 to 50 percent crosslinker
f) 0 to 10 percent of additives, such as rheology control additive, flow modifiers, curing catalysts, etc.
g) 0 to 60 percent pigments
According to one aspect of the present invention, low VOC sealer compositions with improved dry time resulting in the improved Distinctness of Image (DOI) of the top coat in wet on wet application, are disclosed.

The coating compositions of the present invention can be used as the sealer with or without pigment, tintable sealer or as a primer. It is preferred to use the coatings of the present invention as a sealer or tintable sealer. Although the sealer or tintable sealer is preferred, it will be appreciated that the coatings described herein are not intended to limit the utility of the reactive urea/urethane compounds.

The sealer or tintable sealer comprises any suitable film-forming material conventionally used in this art including acrylics, alkyd, polyurethanes, polyesters and aminoplast. The sealer or tintable sealer can be deposited out of conventional volatile organic solvents such as aliphatic, cyclo-aliphatic and aromatic hydrocarbons, esters, ethers, ketones and alcohols including such things as toluene, xylene, butyl acetate, acetone, methyl isobutyl ketone, butyl alcohol, etc.

The resins in the sealer or tintable sealer may be either thermoplastic (e.g. acrylic lacquer systems) or thermosetting. The low VOC coating composition useful to form the sealer formulation are typically made from copolymer compositions characterized as polymerization products of ethylenically unsaturated monomers containing hydroxyl groups and other vinyl monomers wherein the copolymer components are combined in such a manner to give a polymer with a moderate glass transition temperature preferably between about -3°C to about 35°C (using the Fox method of Tg calculation) and a relative weight average molecular weight of less than 10,000. The molecular weight is preferably from about 1,000 - 7,000 based on GPC using polystyrene standards. The hydroxyl number is preferably between 75 and 175 (mg KOH per gram of non-volatile resin). The acid number is preferably between 0 and 10 (mg KOH per gram of non-volatile resin). The ethylenically unsaturated monomers may be selected from, but are not limited to the group essentially consisting of: ethylene and/or ethylenically unsaturated alkyl (meth)acrylates such as methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate as described in related pending U.S. application S.N. 353,990 filed May 19, 1989 and incorporated herein by referenece.

Any substrate material can be coated with the coating composition according to the present invention. These substrate materials include such things as glass, ceramics, paper, wood, and plastic. The coating system of the present invention is particularly adapted for metal substrates, and specifically as an automotive re-finish system. The substrate may be uncoated material or can be primed. The substrate may also be coated with paint products applied at the time of manufacture. The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof. The components of the compositions can be varied to suit the temperature tolerance of the substrate material. For example, the components can be constituted for air drying (e.g. less than 100°F), low temperature cure (e.g.100°F. - 180°F.), or high temperature cure ( e.g. over 180°F.).

The reactive urea/urethane oligomeric compounds useful according to this invention include those described and claimed in detail in copending application S.N. , filed and incorporated herein by reference, as well as the clearcoat and base coat formulations as described in related patent application S.N. , filed and herein incorporated by reference.

### DESCRIPTION OF PREFERRED EMBODIMENT

The present invention relates to a novel coating composition comprising:
a) 5-65 percent of an acrylic co-polymer comprising with a glass transition temperature between -10°C and 35°C (using Fox method of Tg calculation) and a relative weight average molecular weight of 1000-7000.
b) 10 to 50 percent of an organic solvent,
c) 1 to 90 percent of a reactive urea/urethane compounds,
d) 0 to 30 percent of a reactive diluent,
e) 10 to 50 percent crosslinker,
f) 0 to 10 percent of additives such as rheology control additives, floe modifiers, curing catalysts, etc.
g) 0 to 60 percent pigments.

According to one aspect of the present invention, low VOC sealer compositions with improved dry time resulting in the better strike-in resistance and Distinctness of Image (DOI) of the top coat in wet on wet application, are disclosed.

The coating compositions of the present invention can be used as a sealer with or without pigment, tintable sealer, primer, basecoat of pigmented basecoat/clearcoat coating, as a pigmented single stage colorcoat, or as the clearcoat of a basecoat/clearcoat coating. It is preferred to use the coatings of the present invention as a sealer with or without pigment, tintable sealer. Although the sealer or tintable sealer is preferred, it will be appreciated that the coatings described herein are not intended to limit the utility of the reactive urea/urethane compounds (RUU).

Especially preferred are low VOC sealer or tintable sealer comprising about 20 to 40 percent co-vehicle, 10 to 40 percent solvents, 1 to 30 percent reactive urea/urethane compound, 0 to 30 percent reactive diluent, 10 to 50 percent crosslinking agents, 0 to 10 percent additives such as accelerators, flow modifiers, anti-settling agents, wetting agents, dispersing aids and mar and slip agents, etc. and 0 to 45 percent pigments.

Preferred co-vehicles, when crosslinked with isocyanate or non-isocyanate crosslinker, form coatings which have excellent physical properties with short tack-free and no strong odor. A useful co-vehicle can essentially consist of the polymerization product of ethylenically unsaturated monomers containing hydroxyl groups and other vinyl monomers wherein the copolymer components are combined in such a manner to give a polymer with a moderate glass transition temperature preferably between about -3°C to about 35°C (using the Fox method of Tg calculation) and a relative weight average molecular weight of less than 10,000. The molecular weight is preferably from about 1,000 - 7,000 based on GPC using polystyrene standards. The hydroxyl number is preferably between 75 and 175 (mg KOH per gram of non-volatile resin). The acid number is preferably between 0 and 10 (mg KOH per gram of non-volatile resin). The ethylenically unsaturated monomers may be selected from, but are not limited to the group essentially consisting of: ethylene and/or ethylenically unsaturated alkyl (meth)acrylates such as methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate.

Another useful co-vehicle can essentially consist of the polymerization product of ethylenically unsaturated monomers containing vinyl monomers wherein at least one of the vinyl monomers is glycidyl or acid functional, and optionally vinyl monomers containing hydroxyl groups wherein the copolymer components are combined in such a manner to give a polymer with a moderate glass transition temperature as defined above and a relative weight average molecular weight of less than 10,000 preferably from about 1,000 - 7,000 based on GPC using polystyrene standards. The hydroxyl number is preferably between 75 and 175 (mg KOH per gram of non-volatile resin). The acid number is preferably between 5 and 15 (mg KOH per gram of non-volatile resin). The ethylenically unsaturated monomers may be selected from but not are not limited to the group essentially consisting of: ethylene and/or ethylenically unsaturated monomers alkyl (meth)acrylates such as methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; acid functional monomers such as acrylic acid, methacrylic acid, maleic acid, and itaconic acid; glycidyl functional monomers such as glycidyl (meth)acrylate. Optionally this co-vehicle may be subsequently or in situ reacted to a fatty acid through glycidyl groups or reacted to an oxirane functional compound such as the glycidyl ester of an organic acid through organic acid groups.

The co-vehicle can also consist essentially of an acrylic polymer partially esterified by means of a natural or synthetic fatty acid, obtained from the following classes with relative proportions of
1) 5% to 60% by weight of groups originating from the olefinic polymerization of styrene or of a-methyl- styrene or of vinyl toluene.
2) 10% to 70% by weight of groups originating from the olefinic polymerization of a hydroxyalkyl acrylate or methacrylate in which the alkyl group contains 2 to 12 carbon atoms and preferably from 2 to 6 carbon atoms.
3) 5% to 60 % by weight of groups originating from the olefinic polymerization of one or more alkyl mono-,di-, or triacrylates or methacrylates, in which the alkyl group contains 2 to 18 carbon atoms and preferably from 2 to 6 carbon atoms, characterized in that it comprises successively
   a) an olefinic polymerization carried out without a chain transfer agent in a solvent between 140°C and 160°C with a free radical initiator catalyst and,
   b) a partial esterification in a solvent between 165°C and 185°C with an esterification catalyst; the said polymer being partially esterified, on its hydroxyl groups, by means of a saturated or unsaturated synthetic or optionally modified natural fatty acid. The quantity of fatty acid employed representing from 10% to 25 % by weight of the said partially esterified polymer with a final product having a hydroxyl number of between 100 and 160 (mg KOH per gram of non-volatile resin), and an acid number of 0 to 10 (mg KOH per gram of non-volatile resin).

The reactive urea/urethane compounds useful according to this invention are described and claimed in copending application S.N. filed and incorporated herein by reference. These reactive urea/urethane compounds typically are aromatic, aliphatic, or cycloaliphatic urethanes containing reactive groups other than isocyanate groups. Utility is also in clearcoat and base coat formulations described in related patent application S.N. filed .

A urea/urethane compound is a low molecular weight polymer with a degree of polymerization less than ten. The term urethane describes the reaction product of isocyanate and hydroxyl and the urea is the product of isocyanate with amines such as primary and secondary amines. These materials may be referred to as reactive urea/urethane compounds because they contain reactive groups other than isocyanate which can be used to crosslink with other compounds containing isocyanates, amines, and other crosslinking agents known to the art. Reactive urea/urethane compounds may have primary, secondary, or tertiary hydroxyl groups; primary, secondary, or tertiary amine groups; carboxyl groups, oxirane groups and may contain unsaturation as well as other reactive constituent groups. These reactive urea/urethane compounds are essentially free of isocyanate groups, are of low to medium molecular weight, and contain free reactive groups other than isocyanates. These free reactive groups are especially useful to provide for crosslinking in coatings. Reactive urea/urethane compounds so produced are especially useful in coating compositions and in particular in auto refinish undercoat coating compositions. For example, the components can be constituted for air drying (e.g. less than 100°F), low temperature cure (e.g.100°F - 180°F), or high temperature cure ( e.g. over 180°F), or radiation cured coatings.

The present invention relates to novel hydroxyl functional urethane/urea compounds, their preparation and use. In particular, the present invention relates to a process for the production of compounds containing reactive groups and to the reactive compounds produced thereby. Primary hydroxyl groups are especially useful reactive groups and are especially useful on polymers for use in refinish paint compositions. The preferred urea/urethane compounds are referred to as reactive urea/urethane compounds because they contain reactive groups such as the preferred hydroxyl groups. Reactive groups such as carboxyl, epoxy, mercaptan, alkoxysilane, etc. may also be useful on urea/urethane compounds for use in refinish paint compositions.

The present invention also relates to a process for the production of urea/urethane compounds containing reactive groups such as the preferred primary hydroxyl groups. The products are referred to as reactive urea/urethane compounds because they contain reactive groups such as hydroxyl groups which can be used to cross link with other compounds containing isocyanates or other compounds that contain groups that can cross-link with hydroxyl groups such as a melamine-formaldehyde resin. An urea/urethane compound (RUU) is a low molecular weight polymer with a degree of polymerization less than ten.

The reactive urea/urethane compounds of the present invention are especially useful in automotive refinish coating compositions. These coatings can be designed as air-dry, oven bake or radiation cured coatings. The coating compositions of the present invention typically comprise the following:
(i) a principal resin such as an acrylic, polyester, acrylester or urethane resin containing functional groups such as hydroxyl, carboxyl, and amino functional groups.
(ii) a reactive urea/urethane compound compatible with the principal resin.
(iii) a curing agent such as an isocyanate and/or a mixture of curing agents, and optionally
(iv) additives such as accelerators, anti-sagging agents, flow agents, driers, UV absorbers etc. known in the coating art.

The reactive urea/urethane compounds typically combine the reaction product of an isocyanate with an alkanolamine that can be represented as: 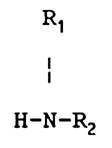
where
- R₁ =: alkyl or cycloaliphatic or benzylic type aryl (shielded aromatic ring) radical with a hydroxyl group.
- R₂ =: Hydrogen or alkyl or cycloaliphatic or benzylic type aryl (shielded aromatic ring) radical with or without a hydroxyl group.

Suitable amines are the alkanolamines and include but are not limited to: 2-(propylamino)ethanol, 2-(Methylamino)ethanol, 2-(Ethylamino)ethanol, 2-(t-Butylamino)ethanol, 2-(n-Butylamino)ethanol, Diisopropylamine and Diethanolamine.

Suitable polyisocyanates useful in the invention include isophorone diisocyanate, tetramethyl xylene diisocyanate, dicyclohexylmethane-4,4'-diisocyanate, the isocyanurate of isophorone diisocyanate and the isocyanurate of hexamethylenediisocyanate.

In addition, aliphatic, aromatic and/or other groups can also be incorporated into the urea/urethane compound by the reaction of -N=C=O groups on the polyisocyanate with other reactants containing abstractable hydrogens such as alcohols.

The reactive urea/urethane compounds preferably contain primary hydroxyl groups, low molecular weight, preferably with a weight average molecular weight less than 6000, as measured by gel permeation chromatography relative to polystyrene standards, a low polydispersity , preferably less than 2.0, and a high Tg or hardness.

Aliphatic, aromatic and/or other groups can also be incorporated into the urea/urethane compound by the reaction of -N=C=O groups on the polyisocyanate with other reactants containing abstractable hydrogens such as alcohols.

Solvents of utility in the coatings are those commonly used in the art. They include but are not limited to ketones such as methyl ethyl ketone, methyl n-amyl ketone, methyl isobutyl ketone, etc., esters such as ethyl acetate, n-butyl acetate, etc., alcohols such as n-butyl alcohol, etc., aromatics such as toluene, xylene, glycol ethers or esters such as propylene glycol monomethyl ester acetate, 3-methoxy n-butyl acetate, ethylene glycol butyl ether acetate, and the like.

Both isocyanates and non-isocyanate crosslinking agents may be used in these coatings compositions. Isocyanate crosslinking agents of utility in these coatings are essentially those commonly used in the art. They include but are not limited to biuretes, isocyanurates, uretdiones, allophanates or adducts of toluene diisocyanate, hexamethylene diisocyanate, isophorone diisocyanate and meta-tetramethyl xylene diisocyanate. The preferred index between the isocyanate groups and the total of all reactive groups contained in the coating with which isocyanates may react, is 0.5 to 2.5 on a molar basis. Non-isocyanate crosslinking agents useful in these formulations can essentially consist of the reaction products of melamine or urea and formaldehyde and various alcohols containing up to and including four carbon atoms. This includes partially alkylated melamine-formaldehyde resins and fully alkylated aminoplast of a low amino content such as Monsanto Resimene RF4518. Also useful are such crosslinking agents as Monsanto Resimene 881, Resimene 882, Resimene 893, or American Cyanamid Cymel 303, Cymel 321, Cymel 380. The preferred index between the melamaine groups and the total of all reactive groups contained in the coating with which melamines may react, is 0.5 to 2.5 on a molar basis. Also finding utility when used with the non-isocyanate crosslinking agents are ketone and aldehyde modifying resins which include but are not limited to BASF Laropal A81, BASF Laropal K80; Huls America Synthetic resin AP, Huls America Synthetic resin H, and Huls America Synthetic resin BL 1201 and ICI Lumiflon LF-916.

Reactive diluents useful in these formulations are materials that provide an increase in solids to the formulation with a lower contribution to the application viscosity than the normal system covehicle. These reactive diluents may be polyesters, polyurethanes, alkyds, caprolactone derived polyols, acrylics, or any other material known to the art. The functionality can likewise be any known to the art, such as, primary, secondary, or tertiary hydroxyl, primary, secondary, or tertiary amine, oxazolidines, aldimines or ketimines of primary amines. Some examples of these materials are Union Carbide's caprolactam derived Tone series such as Tone 200, Tone 210, Tone 301, Tone 305, Tone 310; Inolex Chemical's Lexorez series such as Lexorez 1100-220, Lexorez 1140-190, Lexorez Z-130, Lexorez 3500, Lexorez 1400; Miles' Desmophen 670-B80, Desmophen XP-7052, Rohm and Haas' QM-1007, CasChem's Caspol series such as Caspol 1715, Caspol 1842, Caspol 1962, Caspol 5002.

Additives of utility in these coatings are those commonly used in the art. Mar and slip agents and defoamers which find utility included but are not limited to Byk 141, Byk 304, Byk 306, Byk 307, Byk 325, Byk 331, Byk 341, Dow Corning #7, Dow Corning #54, Dow Corning #200, General Electric SF-69, Troy Chemical Troysol S366, Troy Chemical TroysolAFL, Tego Glide 410, Miles OL44.

Additives also finding utility are curing catalysts which include but are not limited to organic-metallic compounds such as dibutyltindioxide, dibutyltindilaurate, zinc octoate, amine compounds such as triethylamine, 2-diethylaminoethanol, triethylenediamine, organic acids such as p-toluene sulfonic acid, dinonylnapthalene disulfonic acid and dibutyl sulfonic acid. especially preferred are dibutyltindilaurate, 2-diethylaminoethanol and para toluene sulphonic acid.

Also finding utility are flow and rheology modifying agents which include but are not limited to synthetic amorphous hydrophobic silica such as Degussa Aerosil R972, synthetic amorphous hydrophilic silica Degussa Aerosil 200, organo clays, polyethylene wax dispersions, polypropylene wax dispersions, polyamid wax dispersions, ethylene vinyl acetate wax dispersions. Agents such as Byk Anti-terra 202, Byk Anti-terra 204, Byk Anti-terra V, Byk W-960, Byk R-405, Byk-P104, Byk P-104s; Troy Chemical Troythix Antisag 4, Troy Chemical Troythix Antisettle; Raybo Chemical Raybo 6, Raybo Chemical Raybo 94, and Tego Chemie ZFS 460. especially preffered are

Also finding utility are pigment wetting and dispersing aids which include but are not limited to ICI Solsperse hyperdispersants such as Solsperse 5000, Solsperse 12000, Solsperse 22000 and Solsperse 24000; Troy Chemical Troysol CD1, Troy Chemical Troysol CD2 and Troy Chemical Troysol 98C; Daniel Products DispersAyd 9100; Raybo Chemical Raybo 63; Byk Anti-terra U, Byk Anti terra 202, Byk W-960, Byk P-104 Disperbyk 160, Disperbyk 162, Disperbyk 163; Nuodex Nuosperse 657; Nuodex Nuosperse 700, soya lecithin, etc.

Also finding utility in these coatings are various types pigments common to the art which include but are not limited to titanium dioxide, graphite, carbon black, zinc oxide, cadmium sulfide, chromium oxide, lead cyanamide, lead silico chromate, chromium oxide, zinc sulfide, yellow nickel titanium, yellow chromium titanium, red iron oxide, transparent red iron oxide, yellow iron oxides, transparent yellow oxide, black iron oxide, naphthol reds and browns, anthraquinones, dioxazine violet, isoindoline yellows, arylide yellow and oranges, ultramarine blue, phthalocyanine complexes, amaranth, quinacridones, halogenated thioindigo pigments, extender pigments such as magnesium silicate, aluminum silicate, calcium silicate, calcium carbonate, fumed silica, barium sulfate, Wollastokup ES, wollastokup 1100-4, blanc fixe, corrosion inhibitors such as zinc phosphate, strontium phosphate, zinc molybdate, zinc chromate, strontium chromate, barium chromate, orthophosphates, phosphosilicates, phosphate esters, etc.

The pigments can be introduced by first forming a millbase with the hydroxy functional resin utilized in the composition or with other compatible polymers by conventional techniques, such as sand grinding, ball milling, attritor grinding, two roll milling and the like, to disperse and grind the pigments. The mill base is then blended with the other film forming constituents as shown in the sealer example in the patent.

The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof. The components of the compositions can be varied to suit the temperature tolerance of the substrate material. For example, the components can be constituted for air drying (e.g. less than 100°F), low temperature cure (e.g.100°F. - 180°F.), or high temperature cure ( e.g. over 180°F.). The coatings may be formulated to meet the requirements of the equipment intended for use during application.

The following examples are given to illustrate the low VOC undercoat coatings according to present invention. In the examples, the measure of Distinctness of Image (DOI) of the top coat sprayed wet on wet over the sealer, was used to determine the rate of dry time of the sealer and strike-in resistance of the top coat.

### Distinctness of Image

This test is used in an attempt to quantify the appearance of a film. Procedure is: place the panel under the D.O.I. machine; turn on the machine; look up and down the scale (0-100) to find the position at which half of the "c"'s appear to be open and half closed. Record this number. It is important to maintain the same distance and angle from the machine for each test. The D.O.I.meter can be available commercially from suppliers such as Byk company.

### Example from copending application.

This example of the invention utilized two reactions including one to make an intermediate.

### I. Intermediate

1. Composition:

| | | |
|---|---|---|
| A. | Vestanat T-1890 E | 738.6 (Huls-IPDI isocyanurate, 70% NV, 12% -N=C=O) |
| | n-Butyl acetate | 175.6 (urethane grade) |
| | Octadecanol | 80.3 |
| | Triisodecylphosphite | 1.0 |
| B. | Dibutyltin dilaurate | 0.0056 |
| | n-Butyl acetate | 4.5 (urethane grade) |

2. Process:
A. Add components "A" to reactor and heat to 65-75 C.
B. At 65-75 C, add components "B" and hold until the %NCO becomes constant.
C. Cool and store Intermediate under Nitrogen until needed.

### II. Finished Urethane/Urea Compound

1. Composition:

| | | |
|---|---|---|
| A. | 2-(t-Butylamino)ethanol | 146.2 |
| | n-Butyl acetate | 126.5 (urethane grade) |
| B. | Intermediate | 723.0 (from I) |
| C. | n-Butyl acetate | 4.3 (urethane grade) |

2. Process:
A. Add component "A" to reactor and heat to 50C.
B. Add component "B" to reactor over 180 minutes.
C. Flush with component "C" then hold at temperature until % NCO = 0 ( ASTM D2572-87).

### Synthesis of acrylic resin # 1 (Parts are by weight and do not include transfer or process loss)

A mixture of 2363 parts of methyl n-amyl ketone and 336 parts of methyl ethyl ketone was added to a reactor. The reactor was purged with nitrogen. A nitrogen feed and mixing was maintained on the reactor throughout the synthesis. The mixture was heated to reflux (approximately 125 to 131 degrees Celsius). Premix #1, 65 % of premix #2, and premix #3, listed below, was added to the reactor concurrently in separate feed streams over a period of about 150 minutes.

Premix #1 was 3047 parts of normal butyl methacrylate, 4116 parts of styrene, 1844 parts of hydroxyethyl methacrylate, 1148 parts of glacial acrylic acid and 153 parts of methyl n-amyl ketone. Premix #2 was 246 parts of VAZO 88 (1,1'-azobis(cyanocyclohexane)) and 1429 parts of methyl ethyl ketone. Premix #3 was 504 parts of 2-mercaptoethanol and 305 parts of methyl n-amyl ketone.

The polymerization was carried out at reflux with the temperature dropping throughout the addition of reactants. Subsequently 225 parts of methyl n-amyl ketone was used to flush feed pumps and lines for premix numbers 1 and 3. The remainder of premix #2 was added over a period of 60 minutes immediately after the 150 minute addition. The temperature decreased over this addition of the VAZO 88. Subsequently 269 parts of methyl n-amyl ketone was used to flush the feed pump and lines for premix number 2. After a hold of 10 minutes, the reactor was configured with a Barrett trap. The solvent was stripped to a temperature of about 136 degrees Celsius. Then 3493 parts of Cardura E-10 (glycidal ester of Versatic 10 carboxylic acid) and 30 parts of methyl n-amyl ketone was charged into the reactor. The mixture was again heated to reflux (approximately 150 to 151 degrees Celsius). The reactor was held at reflux for three hours, cooled and 710 parts of methyl ethyl ketone added.

The properties of the resin were as follows. The weight percent non-volatile was adjusted to 76% (ASTM 2369) with MEK, the acid number on solids was 9. The Gardner Holt viscosity at 25 degrees Celsius when reduced to 66.4 weight percent with methyl ethyl ketone was J to L. The weight average molecular weight was approximately 4000 (GPC based on polystyrene standards).

### Catalyst T-12 solution

The following materials were combined under agitation, 5.0 grams of dibutyl tin dilaurate and 495 grams of methyl n-hexyl ketone.

### Bentone slurry for sealer paste # 1

Followings were added under agitation, 26.087 grams of methyl hexyl ketone, 41.056 grams of methyl amyl ketone, 8.5 grams of bentone 27, 2.134 grams of Anti Terra U, 22.223 grams of methyl amyl ketone. The solution was mixed at high speed with cowels blade, using pnuematic disperser, till homogenious solution.

### Reducer # 1

The following solvents were combined under agitation, 177.5 grams of methyl n-amyl ketone, 645.0 grams of methyl n-propyl ketone, and 177.5 grams of methyl n-hexyl ketone.

### Isocyanate hardner # 1

An isocyanate hardener solution was prepared as follows. Under a inert, anhydrous atmosphere, 430.0 grams of hexamethylene diisocyanate isocyanurate was mixed with 70.0 grams of urethane grade methyl n-amyl ketone. This mixture was filled into closed containers under an inert anhydrous atmosphere.

### Sealer paste # 1

A sealer paste was prepared as follows. A 4 liter mixing pot suitable for use on a high speed disc impeller was secured to a high speed disc impeller mixer and 575.5 grams of Acrylic resin #1 were charged into the pot. The following materials were added under moderate mixing, 56.23 grams of methyl amyl ketone, 220.33 grams of bentone 27 slurry, 59.92 grams of Shell Epon 1001-X-75, 2.7 grams of soya lecithin, 2.74 grams of Monsanto's modaflow resin modifier, 4.6 grams of Rheox MPA 2000X. These materials were mixed at moderate speed until homogeneous (approximately 10 minutes). Then, 329.58 grams of Mineral Pigments Zinc Phosphate J-0852, 194.77 grams of Bakertalc HI-Talc A-3, 374.55 grams of Engelhard ASP-600, 509.37 grams of Hitox Bartex 65, and 89.89 grams of Dupont Tipure R-960 Titanium Dioxide pigment were added under moderate mixing and mixed until homogeneous. The mixer was then increased in speed to give a peripheral blade velocity of approximately 5000 lineal feet per second. This mixing was maintained for a period of fifteen minutes. The premix was then cooled to room temperature and the viscosity was adjusted to approximately 115 KU with methyl amyl ketone. This adjustment required approximately 19.47 grams of methyl amyl ketone. The premix was then passed through a suitable laboratory small media mill (Eiger 'Mini' motormill 250 or similar) until a grind fineness of 18 to 20 microns was achieved (as determined on a Hegman grind gauge).

### Sealer # 1

To 221.78 grams of the above sealer paste # 1, followings were added under agitation, 24 grams of acrylic resin # 1, 19.215 grams of methyl hexyl ketone, 0.9 grams of catalyst T-12 solution (1% by weight). The sealer was mixed for 10 minutes.

### Sealer # 2

To the 221.78 grams of the above sealer paste # 1, followings were added under agitation, 7.71 grams of acrylic resin # 1, 20.6 grams of the reactive urea/urethane compound, 19.215 grams of methyl hexyl ketone, 0.9 grams of catalyst T-12 solution (1% by weight). The sealer was mixed for 10 minutes.

Other finished material used are commercially available from BASF, High Solid Solo Tinting Base HS44, Hardner DH46, Reducer DR43.

### Topcoat # 1

Following tinting bases (available commercially from high solid Solo line from BASF) were mixed with agitation. 100 ml of HS11, 453 ml of HS 40, 284 ml of HS44, 135 ml of HS 25 and 28 ml of HS 90. The bases were mixed for 10 minutes till homogenious mixture.

**Experimental:** Polished Cold roll steel panels were used. The panels were primed with commercially available epoxy primer DE15 from BASF, using hardner and reducer as recommended by the supplier. The panels were baked for 30'@ 140°F and wet sanded with 400 gritsand paper. Panels were Clean wiped with pre-kleno 901. Both the sealers # 1 and # 2 were sprayed using HVLP gun (with the pressure of 10 psi at the tip). After 25 minutes the top coat # 1 was sprayed, wet on wet over the sealer, using HVLP gun. The ratio of topcoat # 1/ hardner DH 46/ Reducer 43 was 4/1/1 by volume. The hardner DH 46 and reducer DR 43 are available commercially from BASF. The panels were ambiient cured for 7 days before testing.

### COMPARATIVE COATINGS EXAMPLE #1

| **LOW VOC AUTOMOTIVE TINTABLE SEALER, WITH AND WITHOUT REACTIVE UREA/URETHANE COMPOUND (RUU), CURED WITH ISOCYANATE HARDENER.** | | |
|---|---|---|
| | Without RUU | With RUU |
| Sealer # 1 | 265.9 gms | 0.0 gms |
| Sealer # 2 | 0.0 gms | 270.21 gms |
| Tinting Base HS44 | 42.74 gms | 42.74 gms |
| Isocyanate hardener #1 | 45.11 gms | 45.11 gms |
| Reducer # 1 | 48.6 gms | 44.0 gms |
| Initial Viscosity at spray (ford #4 cup) | 22.4 seconds | 23.0 seconds |
| VOC at spray | 3.632 | 3.639 |
| Flash time between sealer & top coat | 25 minutes | 25 minutes |

| Test results of top coated panels | | |
|---|---|---|
| DOI of topcoat (T.C.) | 70 | 80 |
| Initial Adhesion | 100% | 100% |
| humidity (96 hrs) Blisters | None | None |
| adhesion | pass | pass |

## Claims

1. An ambient cure pigmented coating composition comprising:
a) 5-65 percent of a co-vehicle with a glass transition temperature between -10°C and 35°C (using the Fox method of Tg calculation) and a relative weight average molecular weight of 1000-7000.
b) 10 to 50 percent of an organic solvent,
c) 1 to 90 percent of a reactive urea/urethane compound,
d) 0 to 30 percent of a reactive diluent,
e) 10 to 50 percent crosslinker,
f) 0 to 10 percent of additives, such as rheology control additive, flow modifiers, curing catalysts, etc.
h) 0 to 60 percent pigments.

2. The pigmented coating composition of claim 1 wherein the covehicle consists essentially of the polymerization product of ethylenically unsaturated monomers containing hydroxyl groups and other vinyl monomers wherein the copolymer components are combined in such a manner to give a polymer with a moderate glass transition temperature preferably between about - 3°C to about 35°C (using the Fox method of Tg calculation) and a relative weight average molecular weight of less than 10,000.

3. The pigmented coating composition of claim 1 wherein the covehicle consists essentially of the polymerization product of ethylenically unsaturated monomers containing hydroxyl groups and other vinyl monomers wherein the copolymer components are combined in such a manner to give a polymer with a moderate glass transition temperature preferably between about - 3°C to about 35°C (using the Fox method of Tg calculation) and a relative weight average molecular weight of less than 10,000 and the resulting acrylic polymer is subsequently reacted to a fatty acid through glycidyl groups or reacted to an oxirane functional compound such as the glycidyl ester of an organic acid through organic acid groups.

4. The pigmented coating composition of claim 1 wherein the covehicle consists essentially of the polymerization product of ethylenically unsaturated monomers containing hydroxyl groups and other vinyl monomers and the resulting acrylic polymer is subsequently esterified by means of a natural or synthetic fatty acids.

5. The pigmented coating composition of claim 1 wherein the reactive urea/urethane compound comprises the reaction product of a polyisocyanate and a hydroxyl functional component with structure : 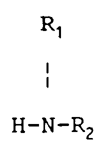 where
R₁ = alkyl or cycloaliphatic or benzylic type aryl (shielded aromatic ring) radical with a hydroxyl group.
R₂ = Hydrogen or alkyl or cycloaliphatic or benzylic type aryl (shielded aromatic ring) radical with or without a hydroxyl group.

6. The pigmented coating composition of claim 5 wherein the reactive urea/urethane has a weight average molecular weight less than 6000, as measured by gel permeation chromatography relative to polystyrene standards, and a polydispersity of less than 2.0.

7. The pigmented coating composition of claim 1 wherein the reactive urea/urethane comprises the reaction product of a polyisocyanate and a hydroxyl functional component with structure: 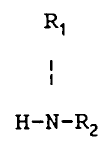 where
R₁ = alkyl or cycloaliphatic or benzylic type aryl (shielded aromatic ring) radical with a hydroxyl group.
R₂ = Hydrogen or alkyl or cycloaliphatic or benzylic type aryl (shielded aromatic ring) radical with or without a hydroxyl group.
and a monofunctional hydroxyl component.

8. The pigmented coating composition of claim 7 wherein the reactive urea/urethane has a weight average molecular weight less than 6000, as measured by gel permeation chromatography relative to polystyrene standards, and a polydispersity of less than 2.0.

9. The pigmented coating composition of claim 1 wherein the reactive diluent can be selected from the group consisting essentially of polyesters, polyurethanes, alkyds, caprolactone derived polyols, acrylics, oxazolidines, aldimines or ketimines of primary amines.

10. The pigmented coating composition of claim 1 wherein the crosslinker consists essentially of biurets, uretdiones, isocyanurates, allophanates or adducts of toluene diisocyanate, hexamethylene diisocyanate, isophorone diisocyanate and meta-tetramethyl xylene diisocyanate.

11. The pigmented coating composition of claim 1 wherein the crosslinker consists essentially of partially alkylated melamine-formaldehyde resins and fully alkylated aminoplast of a low amino content.

12. The pigmented coating composition of claim 1 wherein the curing catalyst can be selected from the group consisting essentially of dibutyltindioxide, dibutyl tin dilaurate, zinc octoate, triethylamine, 2-diethylaminoethanol, triethylenediamine, p-toluene sulfonic acid, dinonylnapthalene disulfonic acid and dibutyl sulfonic acid.
